# EUROPEAN PATENT APPLICATION

(11) **EP 4 386 036 A1**
(43) Date of publication of application: **19.06.2024**
(21) Application number: 23214810.6
(22) Date of filing: 07.12.2023
(51) Int. Cl.: C08G 69/14, B33Y 70/00, B29C 64/153, C08K 5/5313

(54) **MATERIALS FOR SELECTIVE LASER SINTERING AND LASER SINTERING USING SUCH MATERIALS**

(30) Priority: 15.12.2022 EP 22213820
(71) Applicant: EMS-CHEMIE AG, 7013 Domat/Ems (CH)
(72) Inventor: WERNER, Daniel, 7012 Felsberg (CH); JENDE, Lars, 7013 Domat/Ems (CH)
(74) Representative: Bremi, Tobias Hans

(57) **Abstract**

Powder for the production of mouldings in a layer-by-layer process in which areas of a powdered layer are selectively melted, sintered, fused, or solidified, wherein the powder is a thermoplastic polyamide powder in which the polyamide consists of laurolactam and caprolactam, wherein the molar proportion of caprolactam is greater than 61% of the lactams used.

## Description

### TECHNICAL FIELD

The present invention relates to materials for use in powder bed fusion (PBF) technologies such as selective laser sintering (SLS), as well as to methods for the manufacture of such materials, selective PBF processes such as laser sintering processes using such materials and articles prepared using these materials in the SLS process.

### PRIOR ART

Powder bed fusion (PBF) technologies technology is an additive manufacturing process to produce spatial three-dimensional structures by sintering with a laser from a powdered starting material. In this process, unconsolidated loose powder is presented in a container, and the an work piece article is successively built up layer by layer by selective irradiation from above with a laser, which irradiates only the areas to be solidified and causes this solidification by melting the material. After irradiation of a layer and its liquefaction and / or solidification, a subsequent layer of powdered starting material is laid out over it and in the next step the desired area in this next layer is melted and, if necessary, solidified and at the same time fused to the underlying molten or already solidified layer.

Specifically, to prepare the molded part, the polymer powder is applied in a thin layer to a lowerable plate of a sintering chamber, which is normally heated to a temperature slightly below the melting point of the polymer. The layer thickness is chosen in such a way that a melting layer is formed during or after the subsequent laser sintering. The laser sinters the powder particles according to the specifications of the controlling computer. After that, the plate is lowered by the amount of the layer thickness, usually 0.05 to 2.0 mm. With the application of a new powder layer, the process is repeated. After the completion of a preselected number of cycles according to the intended number of layers, a block has been formed, which externally consists of powder. Inside, it houses a highly viscous melt or an already largely solidified block in the shape of the desired molded part. Non-melted areas where the powder is still in solid form stabilize the shape of the melt. After that, the block, consisting of powder shell and melt, is slowly cooled, and the melt solidifies when it falls below the solidification temperature of the polymer. It is advantageous if the block is kept at the solidification temperature until the phase transformation is completed. This is achieved by selecting a low cooling rate in the temperature range of the phase transformation, so that the released heat of solidification keeps the molded body inside at exactly at the solidification temperature until the phase transformation is completed. After cooling, the block is removed from the sintering chamber and the moulding body is separated from the unsolidified polymer powder. The powder can be used again for the process.

As described in DE 197 47 309 commonly used polymer powdered for such processes include polyamide 11 (PA 11) or polyamide 12 (PA 12), polyamide 6 (PA 6), but also polyacetals, polypropylene (PP), polyethylene (PE) and ionomers. Polycarbonates (PC) and polystyrene (PS) have also been used.

EP1720930 relates to a copolymer powder, and the use of this powder for non-focused moulding processes as well as mouldings made from this polymer powder. The forming processes are layer-by-layer processes that use powders, whereby selectively areas of the respective layer are melted by non-focused introduction of electromagnetic energy. Selectivity can be achieved by masks, by applying inhibitors, absorbers, susceptors. The mouldings built with the powder according to the processes can be varied compared to mouldings from conventional powders with regard to the component properties, especially the mechanical and thermal component properties, in a wide range, depending on the composition. Systems of the construction PA 6/12/66 are effectively worked and an MVR value in the range of 1-12 g/min is prescribed.

EP2274363 relates to a method for reducing the crystallization temperature and the melting temperature of a polyamide powder resulting from the polymerization of at least one major monomer, wherein the reduction of the crystallization temperature is greater than the reduction of the melting temperature process, comprising a step of polymerization of at least one majority monomer with at least one different minority comonomer, which is based on the same polymerization method, such that at least one majority monomer has been polymerized, wherein the at least one minority comonomer is selected from aminocarboxylic acids, diamine-diacid pairs, lactams and / or lactones, and wherein the at least one smaller co-monomer comprises 0.1 to 20 % by mass of the total mixture of the / the monomer (s) and co-monomer (s), preferably 0.5, represents to 15 mass% by mass of the total mixture, preferably 1 to 10% by mass of the total mixture. Systems of the type PA 12/6 are used, whereby the proportion of caprolactam must not exceed 20 % by mass.

WO-A-2011124278 relates to a polymer powder for use in a layer-by-layer process in which areas of each powder layer are selectively fused by introducing electromagnetic energy. The polymer powder contains: at least one polyamide of the AB type, prepared by polymerization of lactams having 10 to 12 carbon atoms in the monomer unit or polycondensation of the corresponding aminocarboxylic acids having 10 to 12 carbon atoms in the monomer unit and at least one AABB type polyamide prepared by polycondensation of diamines and dicarboxylic acids, each of which comprises 10 to 14 carbon atoms in the monomer units, the AB-type polyamide contains up to 20 mol% of the AABB comonomer units and the AABB-type polyamide contains up to 20 mol% of the AB monomer units. The invention also relates to a process for preparing such a powder, a layer-by-layer process for producing an moulding article body from such a powder in which areas of each layer are selectively melted by introducing electromagnetic energy, wherein selectivity is obtained using masks or by applying inhibitors, absorbers or susceptors or focusing the applied energy, and thus prepared mouldings.

WO-A-2015009790 describes a part material for printing three-dimensional parts using an additive manufacturing system based on electrophotography, where the part material contains a composition with a semi crystalline thermoplastic material and a charge control agent. The part material is provided in powder form with a controlled particle size and is configured for use in the electrophotography-based additive manufacturing system with a layer transfusion arrangement for printing the three-dimensional parts layer by layer. Although different materials for the powder used are mentioned, concrete systems are not worked.

WO-A-2020064825 relates to a sintered powder comprising a first polyamide component and a second polyamide component, wherein the melting point of the second polyamide component is higher than the melting point of the first polyamide component. The invention further relates to a method for preparing a moulding by sintering the sintered powder or by an FFF process (fused filament fabrication) and a moulding obtainable by the inventive method. The invention further relates to a process for preparing the sintered powder. Mixtures of aliphatic polyamides with semi-aromatic polyamides are used, whereby polyamide 6 and polyamide 66 are used as aliphatic polyamides.

CN-A-107337793 introduces a copolymerized nylon powder material used for selective laser sintering and a process for its manufacture. The method includes the following steps: performing a copolymerization reaction on a short-chain nylon raw material and a long-chain nylon raw material using a copolymerization reaction principle to obtain copolymerized nylon resin, performing a cryogenic crushing, drying and sieving of the copolymerized nylon resin, and adding a flow aid and an antioxidant to obtain the copolymerized nylon powder material selective laser sintering is used. Systems based on polyamide 1010 as well as polyamide 1212 or polyamide 66 are used.

CN-A-104830053 relates to the field of high-molecular materials and aims to solve a problem of a high industrial cost of nylon 12 in the field of 3D printing. The invention discloses a caprolactam-laurolactam co-polymer modified by glass fibers and a preparation method of a powder thereof, wherein the relative mechanical performances of the obtained polymer are described as follows: tensile strength is 50-65 MPa, elongation at break is 50-300% and water absorption is 2.3-0.4%. The powder is 10-80 [mu]m is particle size. The whole preparation process is free of generation of any toxic and harmful substances such as waste water and waste gas and the like. The preparation method is short in required reaction time, is high in conversion rate and is stable in molecular weight, and is low in cost. The co-polymer powder is excellent in the performances such as thermodynamic properties and size stability, is low in production cost and usage cost, is uniform in particle size and can be used for partially replacing, especially in the field of 3D printing, the nylon 12 at a certain degree.

WO2005082979 relates to a polymer powder comprising a copolymer, to the use of said powder in a shaping method and to molded bodies that are produced from said polymer powder. The shaping methods are methods that operate layer by layer using a powder and during said methods areas of each layer are fused by the focused application of electromagnetic energy. The selectivity of the application of energy can be achieved by focusing a laser beam through suitable lenses or through suitable tubes, cables or optical fibres, without restricting the invention to the use of these materials. Additional focusing can be obtained using suitable mirrors or lenses. Once cooled, the solidified molded bodies can be removed from the powder bed. The component characteristics of the molded bodies that have been produced using the inventive powder according to the inventive method, in particular the mechanical and thermal component characteristics, can be varied within a wide range, depending on their composition in comparison to molded bodies produced from conventional powders. For amorphous copolymers in particular, the flow behavior for the shaping method can be optimized by the skilful selection of comonomers. An additional advantage is that processing can also be simplified by the skillful composition of the copolymer. It is possible to conduct the processing at lower temperatures, which simplifies the temperature control and accelerates said processing. The slower crystallization of semi-crystalline polymers in comparison to semi-crystalline homopolymers promotes the coalescence of the fused particles and leads to improved shrinkage behavior in the molded bodies.

US-B-8097333 provides pre-impregnated composite material (prepreg) that can be cured to form composite parts that have high levels of damage tolerance. The matrix resin includes a thermoplastic particle component that is a blend of particles that have a melting point above the curing temperature and particles that have a melting point at or below the curing temperature.

Kehayoglou (European Polymer Journal, Volume 19, Issue 3, 1983, Pages 183-188) reports that copolyamides of high mol.wt were obtained by the anionic copolymerization of ε-caprolactam with ω-laurolactam at 180°C, using a sodium caprolactamate-N-phenylcarbamoylcaprolactam initiator activator system. The proportions of co-units in the copolymers were close to those in the comonomer feeds. The copolymers were crystalline and substantially fully hydrogen-bonded over the whole range of compositions, except at 50/50 mole% ratio, each displayed only one crystalline phase corresponding to that of the major component. Tm and density measurements indicated a crystallinity minimum at 50 60 mole% NH(CH2)5CO unit content. The properties of the copolyamides were consistent with random copolymeric structures.

US-A-2018361681 relates to a method for reducing the crystallization temperature and the melting temperature of a polyamide powder resulting from the polymerization of at least one predominant monomer, in which the reduction in the crystallization temperature is greater than the reduction in the melting temperature, said method comprising a step of polymerization of said at least one predominant monomer with at least one different minor comonomer polymerized according to the same polymerization process as said at least one predominant monomer, said at least one minor comonomer being chosen from aminocarboxylic acids, diamine/diacid pairs, lactams and/or lactones, and said at least one minor comonomer representing from 0.1% to 20% by weight of the total blend of said monomers(s) and comonomer(s), preferably from 0.5% to 15% by weight of said total blend, preferably from 1% to 10% by weight of said total blend.

### SUMMARY OF THE INVENTION

It is an object of the present invention to propose a powder for use in a powder bed fusion method, such as, for example, an SLS method of the type described above. The powder bed fusion method can comprise the use of a focused or non-focused input of electromagnetic energy, thermal energy, or other energy to selectively fuse, melt, sinter, or solidify a powder material in an additive manufacturing process. Preferably, the powder is for the production of articles/mouldings in a layer-by-layer process in which areas of a powdered layer are selectively melted using focused or non-focused input of electromagnetic energy.

Specifically, a powder is to be provided that has at least one of the following advantageous properties:
- wide range of mechanical and physical properties that are close to those of conventional PP and PA11 systems;
- lower operating temperatures with increased amount of laurolactam, with reduced cooling time and increased recyclability of the product without significantly changing the impact strength of the material. (increased process speed)
- Polyamide with material properties without/with reduced shrinkage and with excellent properties in the Z direction, in contrast to the current market standard;
- Reduction of production costs compared to PA11 materials;
- Possibility of dry mixing of colours within the material to print fully coloured parts where the colours do not bleed out;
- Excellent additivity, i.e. a polymer to which additives such as flame retardants may be added without a detrimental effect to the properties and/or printability compared to the additive-free polymer.

According to a first aspect of the present invention, it relates to a powder of a copolyamide for the preparation of mouldings in a layered process in which selectively areas of a powdered layer are
(1) melted by input of electromagnetic energy (typically by a controlled laser),
(2) melted by input of thermal energy from a source other than electromagnetic energy, or
(3) otherwise melted, fused, sintered, or solidified to form an article or object.

Such a powder is characterized according to claim 1, i.e. in that as a powder for the powdery layer a thermoplastic, preferably ground polyamide powder is used, in which the polyamide is composed of laurolactam (Lc12) and caprolactam (Lc6), wherein the proportion of laurolactam larger than 61% mol% of the lactam used. Composed of laurolactam and caprolactam in this context means consisting of laurolactam and caprolactam, and means polyamide which has been synthesized using laurolactam and caprolactam exclusively. Preferably, the powder is free from glass fibers. So, if the thermoplastic polyamide powder comprises additives, these additives do not comprise any glass fibers, whether ground glass fibers or full glass fibers. So, preferably neither the powder as such nor the starting material for the powder comprises glass fibers.

To make the powder actually suitable for the production of mouldings in a layer-by-layer process in which areas of a powdered layer are selectively melted, sintered, fused, or solidified, normally the concentration of end groups for (primary) amine end groups is at least 10 or at least 20 µeq/g (mmol/kg) and the concentration for acid (carboxylic) end groups is at least 20 or at least 30 µeq/g (mmol/kg) or the concentration of end groups for (primary) amine end groups and the concentration for acid (carboxylic) end groups is at least 20 or at least 30 µeq/g (mmol/kg).

Preferably the concentration of the (primary) amino end groups is in the range of 10-70 or 20 - 70 µeq/g and the concentration of the (carboxylic) acid end groups is in the range of 20 - 80 or 30 - 80 µeq/g, with the proviso that the concentration of the (primary) amino end groups is smaller than the concentration of the (carboxylic) acid end groups.

Preferably the concentration of the (carboxylic) acid end groups is not more than twice as large as the concentration of the (primary) amino end groups.

Alternatively or cumulatively defined, preferably the concentration of these end groups is the same or not differing by more than 25% or 20%, preferably not differing by more than 10%. So preferably the ratio between (primary) amine end groups and carboxylic end groups is in the range of 1:1.

If there is a difference, preferably there are more carboxylic end groups, so preferably the ratio between (primary) amine end groups and carboxylic end groups is in the range 1:1-1:7, preferably in the range of 1:1-1:3.

The end group concentrations of over 20 µeq/g (mmol/kg) can be achieved by polycondensation with or without the use of specific additives to adapt the end group ratios, in particular if not an anionic condensation but a polycondensation is used. Additives to adapt the end group ratios are known in the art. For example, 0.1-0.8 wt. % of a diacid such as adipic acid or a triacid such as trimesic acid can be used to convert part of the amine functionalities to acid end groups of the resulting polyamide.

According to a further aspect of the present invention, this relates to a method for producing a thermoplastic polyamide powder for use in a process as described above. In one example, the method is characterized in particular in that by means of a suitable screening technology (tumble air jet screener, ultrasound tumbler or winnower) a grain size distribution suitable for the printing process is achieved. In other examples, the method may not use a screening technology.

Furthermore, in some examples, the method includes forming a thermoplastic polyamide powder using solvent precipitation, solvent pulverization, melt emulsification, melt pulverization, or another micronization technique. In addition, in some embodiments, it is possible to prepare a composition for use in additive manufacturing by blending the polyamide powder with one or more additional components or additives, such as an additive or filler. Such a composition can be prepared, in some examples, by dry blending or wet blending.

According to a further aspect, the present invention describes compositions for use in additive manufacturing, such as SLS or another additive manufacturing method in which a granular or particulate material is melted, fused, sintered, or otherwise solidified in a selective manner. In some embodiments, such a composition comprises as a component a polyamide powder described herein. The polyamide powder may form all or part of a sinterable powder. In some cases, the polyamide powder is the primary or majority component of a sinterable powder composition. For instance, in some embodiments, a composition for additive manufacturing described herein comprises up to 100 wt. %, up to 99 wt. %, up to 95 wt. %, or up to 90 wt. % copolyamide powder, based on the total weight of the sinterable powder. In some instances, the sinterable powder comprises 50-100 wt. %, 50-99 wt. %, 50-90 wt. %, 50-80 wt. %, 50-70 wt. %, 60-100 wt. %, 60-99 wt. %, 60-90 wt. %, 70-100 wt. %, 70-99 wt. %, 70-90 wt. %, 80-100 wt. %, 80-99 wt. %, 80-95 wt. %, 85-100 wt. %, 85-99 wt. %, 85-95 wt. %, 90-100 wt. %, or 90-99 wt. % copolyamide powder, based on the total weight of the sinterable powder. In some cases, the sinterable powder further comprises another granular, particulate, or powder component, in addition to the copolyamide powder component.

According to the invention, in the thermoplastic, ground polyamide powder, the proportion of caprolactam is larger than 61 mol% of the lactams used, preferably in the range of 65-95 mol% (meaning in the window of larger than 61% up to 95%) or 65-90 mol% of the lactams used.

The thermoplastic, polyamide powder preferably has a relative viscosity (measured in m-cresol at a temperature of 20 °C and a concentration of 0.5 wt.-% according to ISO 307) in the range of 1.4-1.8, preferably in the range of 1.6-1.9, or in the range of 1.6-1.85.

The thermoplastic, polyamide powder further preferably has a melting point larger than 120 or in the range of 120-210 °C, preferably in the range of 134-200 °C.

The thermoplastic, polyamide powder may also have a crystallization temperature (T_{rc}, or recrystallization temperature, which is measured during cool-down, or cold crystallisation temperature T_{cc} which is determined during the second heating cycle by DSC measurements, in each case measured in accordance with ISO 11357-3 (2013)) in the range of 60-170 °C or 80-160 °C, preferably in the range of 90-160 °C or in the range of 70-140 °C.

Typically, the powder is suitable and adapted for the production of mouldings in a layer-by-layer process in which areas of a powdered layer are selectively melted using focused or non-focused input of electromagnetic energy.

According to a preferred embodiment, in the thermoplastic, polyamide powder the proportion of caprolactam is greater than 61 mol% (preferably in the range of larger than 61 up to 95 mol%), preferably 70-92 mol% or 65-92 mol%, of the lactams used, the melting point is in the range of 120-210°C, preferably in the range of 134-200°C, and the crystallization temperature, preferably a recrystallization temperature, in the range of 60-170°C, preferably in the range of 70-160°C or 80-140°C, and wherein the polyamide powder is preferably prepared without chain control.

According to yet another preferred embodiment, the proportion of caprolactam is in the range of greater than 61-90 mol%, preferably 65-85 mol%, of the lactams used, the melting point in the range of 150-200 °C, preferably in the range of 155-195 °C, and the crystallization temperature, preferably a recrystallization temperature, in the range of 60-170°C or 110-170 °C, preferably in the range of 120-165 °C, and wherein the polyamide powder is preferably prepared without chain control.

The powder preferably has a sinter window in the range of 5-40 °C, preferably in the range of 6-35 °C. The sinter window is defined as the window (Tₘ-T_{rc}) between the melting temperature Tₘ and the recrystallization temperature T_{rc}.

The thermoplastic, polyamide powder can be prepared by a grinding process, preferably by using a cryogrinding process. The grinding is preferably followed by a sieving process for generating a desired particle size distribution.

Preferably the particle size distribution is such that 80%, preferably 90%, of the particles are located within a range of sizes of 20-100 µm, preferably in the range of 40-90 µm. Preferably, the value of D10 measured according to ISO 13322-2 is in the range of 15-40 µm, preferably in the range of 20-30 µm, and/or the value of D95 measured according to ISO 13322-2 is in the range of 80-99 µm, preferably in the range of 85-98 µm.

Typically, the powder has a diameter D50 measured according to ISO 13322-2 of 50-75 µm, preferably 50-65 µm, more preferably 50-60 µm.

The particles preferably have an essentially spherical or potato shape.

The thermoplastic, ground polyamide powder may preferably have an MFR value, measured according to ISO 1133, in the range of 7-12 g / 10min.

Furthermore, the present invention relates to a copolyamide composed of laurolactam and caprolactam, wherein the proportion of caprolactam is larger than 61 mol%, preferably in the range of greater than 61 - 95 mol% of the lactams used (meaning in the window of larger than 61% up to 95%), for preparing a powder as detailed above.

Further the present invention relates to a use of a thermoplastic, ground polyamide powder in which the polyamide is composed of or comprises laurolactam and caprolactam, preferably exclusively, and wherein the proportion of caprolactam is 40 - 60 mol% of the lactams used, for the preparation of mouldings in a layer-by-layer process in which selective areas of a powdered layer are fused, sintered, melted, or solidified, preferably using focused or non-focused input of electromagnetic energy.

Preferably the powder consists of the polyamide and further additives in an additive amount of not more than 20 weight% or 15 weight%, preferably in the range of 1-12 weight% or 5-10 weight%, relative to the total weight of the powder. Preferably such additive is one of a combination of the following; filler, preferably selected from the group of of talc, aluminum oxide-based fillers, glass fillers, metal carbonates such as calcium carbonate; flow agents, preferably selected from the group of fumed or precipitated silica, metal salts of long-chain fatty acids, such as metal stearates, titanium dioxide, group 1 salts, fumed aluminum oxide; flame retardants, preferably selected from the group of organic or inorganic mono- or diphosphinates, preferably metal alkyl phosphinate, in particular aluminium diethyl phosphinate, alone or in combination with synergist compounds, preferably containing nitrogen and/or phosphorous, including melem, melam, melon or other melamine or derivatives thereof; flame retardants selected from the group consisting of melamine derivatives.

Also the present invention relates to a method for preparing a thermoplastic polyamide powder for use in a layer-by-layer process in which selective areas of a powdered layer are sintered, melted, or solidified, preferably melted by focused or non-focused input of electromagnetic energy, wherein the powder is a thermoplastic, ground polyamide powder in which the polyamide of comprises or consists of laurolactam and caprolactam, preferably exclusively, and wherein the proportion of caprolactam is greater than 60 mol% of the lactams used, wherein preferably the thermoplastic, ground polyamide powder is prepared by cryo grinding process.

The method for preparing the thermoplastic polyamide powder involves typically synthesizing the polyamide by reacting the appropriate amounts of caprolactam and laurolactam monomers, if needed supplemented with additives of adjusting the end groups, under the appropriate conditions of elevated temperature and/or pressure under stirring, followed by cooling and if needed granulation and, if needed, supplementing with additives in an extruder, again followed by granulation and optionally grinding to obtain the final powder, for example under cryo-grinding conditions. Preferably a polycondensation is used. Further the invention relates to a method of printing a three-dimensional article comprising: providing a composition comprising a powder as detailed above; and selectively solidifying layers of the composition to form the article, preferably using focused or non-focused input of electromagnetic energy. Preferably the composition is provided in a layer-by-layer process.

In some embodiments, for example, a composition for additive manufacturing described herein comprises a flow aid component.

Furthermore, the present invention relates to an article or moulded body prepared using a method as described above, or an article or a moulded body prepared from or formed from a composition or powder described above.

Further embodiments of the invention are laid down in the dependent claims.

### DESCRIPTION OF PREFERRED EMBODIMENTS

Preferred embodiments of the invention are described below on the basis of the embodiments, which serve only as an explanation and are not to be interpreted restrictively. The condensation reaction as well as the grinding process and the use in the SLS process according to the invention are explained, the exemplary values being those of inventive examples B1-B4, in particular B3.

### Step A - Copolyamide:

Caprolactam (50.60 Kg, 75 mol%) and laurolactam (29.40, 25 mol%) were transferred with water (10.80 Kg, 12 wt%) to an autoclave where the mixture was stirred at 180-200 °C for 120 minutes. The mixture was then heated to 285 °C and 20 bar, and stirred under constant pressure of 20 bar for 5 hours at 290 °C.

Over 1.5 hours, the polymer was cooled to 270 °C and the pressure was reduced to 0.3 bar. The temperature was subsequently reduced to 260 °C.

The polycondensate was then granulated and dried in a standard procedure.

Analytics: Melting point: 175 °C, Crystallisation peak: 101 °C. Relative viscosity (0.5% in m-cresol): 1.7

Where additives were required, a compounding step was carried out. Compounds were additivated through a twin-screw compounder with careful control of both the temperature profile, throughput rate and shear to allow for optimized homogeneity. The extruded materials were then cooled progressively in a water bath and granulated. Post granulation the material was dried under vacuum.

### Step B - Powder:

The granules obtained from step A were ground with the addition of liquid nitrogen in the counter run with a pin mill of the type Hosokawa 160C at -50 °C, to the raw ground material. Subsequently, the raw ground material was separated with an ultrasonic sieve to a grain size distribution of approximately 40-90 µm, using, screen fabrics of according mesh size are used.

Analytics: Measured grain size distribution (µm): D10: 24.4 D50: 52.9 D95: 95.3, as determined on Camsizer XT according to ISO 13322-2.

### Step C: SLS Mouldings

The powder obtained from step C was printed for the production of test bodies (ISO 527) using an SLS printer SPro60 from 3D Systems (equipped with a CO2 Laser).

The printer was set with the parameters shown in the **Table 1** below for the worked examples B1-B4 and VB1 (comparative example) having the given properties:

| **Sample:** | **B1** | **B2** | **B3** | **B4** | **VB1** | **VB2** |
|---|---|---|---|---|---|---|
| LC6/LC12 Ratio | 90/10 | 84/16 | 75/25 | 65/35 | 0/100 | 56/44 |
| Tm /°C (ISO 11357) | 190-210 | 185-195 | 157-180 | 134-150 | 170-180 | 125-134 |
| Tg / °C (DSC, ISO 11357-2) | 42 | 44 | 37 | 34 | 40 | 34 |
| Tcc / °C (ISO 11357-3) | none | 77 | 55.4 | 55.4 | 101 | none |
| Trc / °C (ISO 11357) | 141 | 131 | 79.2 | 79.2 | 144 | 90 |
| Primary amine end groups (µeq/g) | 35 | 36 | 58 | 61 | 12 | 54 |
| Acid end groups (µeq/g) | 40 | 58 | 65 | 70 | 100 | 60 |
| Warm up duration | 1.5 h | 1.5 h | 1.5 h | 1.5 h | 1.5 h | 1h |
| Part bed temperature (T/°C) | 184 | 171 | 145 | 127 | 170 | 121 |
| Left/Right Temperature (T/°C) | 145 | 140 | 121 | 75 | 136 | 90 |
| Laser Parameter: Fill Laser Power (W), Outline Laser Power (W), Slicer Fill Scan Spacing (mm) | 60, 20, 0.2 | 70, 25, 0.3 | 60, 20, 0.2 | 60, 20, 0.2 | 60, 20, 0.2 | 60, 20, 0.2 |
| Flowability | Excellent | Excellent | Excellent | Excellent | Excellent | Excellent |
| Cracks/Warpage/Curling | None/ minimal/ none | None/ minimal/ none | None/ minimal/ none | None/ minimal/ none | None/ minimal/ none | None/ minimal |
| Cool down duration | 12 h | 12 h | 12 h | 12 h | 12 h | 16 h |
| Viscosity before print | 1.8 | 1.8 | 1.7 | 1.6 | 1.6 | 1.75 |
| Viscosity after print | 1.7 | n.d. | n.d. | n.d. | 1.7 | 1.76 |

| | | | | | | |
|---|---|---|---|---|---|---|
| n.d: not determined | | | | | | |

**Flowability:** determined visually by how filled the parts were after re-coating; good flowability parts showed complete filling.

**Relative viscosity** of the residual powder was measured in m-cresol at a temperature of 20 °C and a concentration of 0.5 wt.-% according to ISO 307.

**Tensile modulus** was measured according to ISO 527 with a pulling speed of 1 mm/min ISO tension rod, standard: ISO/CD 3167, type A1, 170 × 20/10 × 4 mm at a temperature of 23 °C.

**Tensile strength** and **elongation at break were measured** according to ISO 527 with a tensile speed of 5 mm/min ISO tension rod, standard: ISO/CD 3167, type A1, 170 × 20/10.× 4 mm, temperature 23 °C

**Charpy Impact strength** was measured according to ISO 179/*eA on ISO test bars according to standard: ISO/CD 3167, type B1, 80 × 10 × 4 mm at 23 °C.

**Surface quality** was assessed visually.

**Flame retardancy** was tested in accordance with the requirements of UL-94 on test specimens printed using an SLS printer SPro60 from 3D Systems (equipped with a CO₂ Laser).

**Glass transition temperature (T_{g}), melting point (Tₘ), crystallization temperature (T_{c}),**

**Recrystallization temperature (T_{rc}) cold crystallisation temperature T_{cc}:** ISO standard 11357-1, 11357-2, 11357-3 (2013); Powdered material; the differential scanning calorimetry (DSC) was carried out using a DSC 2920 instrument from TA Instruments with a heating rate of 20 K/min and a cooling rate of 5 K/min. The thermogram was analysed using the Universal Analysis 2000 program from TA Instruments.

The sample was quenched in dry ice after the first heating run for the purpose of determining the glass transition temperature. The glass transition temperature (T_{g}) was determined on the second heating run. The midpoint of the glass transition range, which was reported as the glass transition temperature (T_{g}), was ascertained by the "half-height" method.

For the cold crystallization temperature (T_{cc}) the peak value during a second heating cycle is taken; for the recrystallization temperature (T_{rc}) the value taken during the cool-down phase of the first heating cycle is recorded.

**Endgroup determination:** The concentrations of amino and carboxy end groups are determined by means of potentiometric titration. For the (primary) amino end groups here, from 0.2-1.0 g of polyamide were dissolved in a mixture composed of 50 ml of m-cresol and 25 ml of isopropanol at from 50-90° C., and titrated with a 0.05 molar perchloric acid solution after addition of aminocaproic acid. For determination of COOH end groups, 0.2 to 1.0 g of the specimen to be determined is dissolved, as a function of solubility, in benzyl alcohol or in a mixture composed of o-cresol and benzyl alcohol, at 100° C., and titrated with a 0.1 molar tetra-n-butylammonium hydroxide solution after addition of benzoic acid.

**Table 2 lists the measured properties of the examples:**

| **Sample:** | **B1** | **B2** | **B3** | **B4** | **VB1** | **VB2** |
|---|---|---|---|---|---|---|
| Tensile modulus (MPa) | 2600 | 2025 | 1625 | 1250 | 1788 | 1312 |
| Tensile strength (MPa) | 63.8 | 52.4 | 45.2 | 38.1 | 47.7 | 39.3 |
| Elongation at break (%) | 18.5 | 38.1 | 31.3 | 55.5 | 6.5 | 30.9 |
| Charpy impact strength (kJ/m²) | 7.2 | OB | 18.4 | - | 19.0 | 72.4 |
| Part colour | White - Yellow | White-yellow | White | White | White | White |
| Surface finish | rough | rough | smooth | smooth | smooth | smooth |

| | | | | | | |
|---|---|---|---|---|---|---|
| OB: no break | | | | | | |

Further experiments with flame retardants were conducted as shown in the **Table 3** below.

| **Sample:** | **Additive amount** | **Tₘ/T_{rc} (onset)** | **Sinter window (Tₘ-T_{rc})** | **Flame resistance** |
|---|---|---|---|---|
| PA12 | 0% | 175/ 144 | 31 °C | <30s, droplets (V2) |
| PA12 + Exolit | 8% | 173/ 144 | 29 °C | <30s, droplets (V2) |
| Example B1 | 0% | 190/ 147 | 43 °C | <30s, droplets (V2) |
| Example B1 + Exolit | 8% | 190/ 142 | 48 °C | <10s, no droplets (V0) |
| Example B2 | 0% | 172/131 | 41 °C | <30s, droplets (V2) |
| Example B2 + Exolit | 8% | 172/119 | 53 °C | <10s, no droplets (V0) |

| | | | | |
|---|---|---|---|---|
| Tₘ = melting temperature, T_{rc} = recrystallization temperature, Exolit = Exolit OP 1230, Clariant, CH. | | | | |

The powder according to the invention enables a wide range of accessible mechanical properties (high stiffness to high flexibility), with print temperatures that can be accessed by standard SLS printers without issues with overheating (in comparison to PA6 which requires printers that can exceed the standard print temperature limit of 190°C).

The sinter window achieved by the inventive materials, in contrast with the comparative PA12, increases upon additivation of the flame retardant. A narrow sinter window leads to warpage and curling of the printed parts. This unexpected broadening of the sinter window in the compositions according to the invention is thus highly advantageous for the SLS process.

## Claims

1. Powder for the production of mouldings in a layer-by-layer process in which areas of a powdered layer are selectively melted, sintered, fused, or solidified,
wherein
the powder is a thermoplastic polyamide powder in which the polyamide consists of laurolactam and caprolactam, wherein the molar proportion of caprolactam is greater than 61% of the lactams used.

2. Powder according to claim 1, wherein in the thermoplastic, preferably ground, polyamide powder the proportion of caprolactam is at least 65 mol % of the lactams used, preferably in the range of 65-95 mol % of the lactams used.

3. Powder according to claim 1 or 2, wherein in the thermoplastic polyamide powder is a ground thermoplastic polyamide powder.

4. Powder according to any one of the preceding claims, where the thermoplastic, preferably ground, polyamide powder has
a melting point, measured in accordance with ISO 11357, of greater than 120 °C,
and/or a glass transition temperature, measured preferably by dynamic mechanical analysis in accordance with ISO 6721-2:2008, of ≥ 10 °C preferably of ≥ 20 °C or ≥ 30 °C,
and/or a relative viscosity (measured in *m*-cresol at a temperature of 20 °C and a concentration of 0.5 wt .-% according to ISO 307) in the range of 1.6-1.9, preferably in the range of 1.6-1.85,
and/or a crystallization temperature, preferably a recrystallization temperature, measured in accordance with ISO 11357-3 (2013), in the range of 60-160 °C, preferably in the range of 70-140 °C,
and/or a concentration of end groups for (primary) amine end groups of at least 10 or at least 20 µeq/g (mmol/kg) and a concentration for acid (carboxylic) end groups of at least 20 or at least 30 µeq/g (mmol/kg).

5. Powder according to any one of the preceding claims for the production of mouldings in a layer-by-layer process in which areas of a powdered layer are selectively melted using focused or non-focused input of electromagnetic energy.

6. Powder according to any one of the preceding claims, wherein in the thermoplastic, preferably ground, polyamide powder the proportion of caprolactam is in the range of larger than 61 up to 95 mol%, preferably 65-92 mol%, of the lactams used, the melting point is in the range of 120-210°C, preferably in the range of 134-200 °C, and a crystallization temperature, preferably a recrystallization temperature, in the range of 60-170 °C or 70-160 °C, preferably in the range of 70-140°C, and wherein preferably the polyamide powder is prepared without chain control.

7. Powder according to any one of the preceding claims, wherein the powder has a sinter window in the range of 5-40 °C, preferably in the range of 6-35 °C.

8. Powder according to any one of the preceding claims, wherein the thermoplastic, ground polyamide powder is prepared by cryogrinding process,
and/or wherein the powder has a diameter D50 measured according to ISO 13322-2 of 50-75 µm, preferably 50-65 µm, more preferably 50-60 µm,
and/or wherein the thermoplastic, ground polyamide powder has an MFR value, measured according to ISO 1133, in the range of 7-12 g / 10min.

9. Powder according to any one of the preceding claims, wherein it consists of the polyamide and further additives in an amount of not more than 20 weight% or 15 weight%, preferably in the range of 1-12 weight% or 5-10 weight%, relative to the total weight of the powder, and wherein preferably the additive is one or a combination of the following; fillers, preferably selected from the group of talc, aluminium oxide-based fillers, glass fillers, metal carbonates including calcium carbonate; flow agents, preferably selected from the group of fumed or precipitated silica, metal salts of long-chain fatty acids, including metal stearates, titanium dioxide, group 1 salts, fumed aluminium oxide; flame retardants, preferably selected from the group of organic or inorganic mono- or diphosphinates, preferably metal alkyl phosphinate, in particular aluminium diethyl phosphinate, alone or in combination with synergist compounds, preferably containing nitrogen and/or phosphorous, including melem, melam, melon or other melamine or derivatives thereof.

10. Copolyamide composed of laurolactam and caprolactam, wherein the proportion of caprolactam is greater than 61 mol% of the lactams used, or at least 65 mol % of the lactams used, or in the range of 65-95 mol % of the lactams used, for preparing a powder according to one of the preceding claims.

11. Use of a thermoplastic, preferably ground, polyamide powder, preferably according to any of claims 1-10, in which the polyamide comprises or consists of laurolactam and caprolactam, wherein the proportion of caprolactam is greater than 61 mol% of the lactams used, for the preparation of parts or mouldings in a layer-by-layer process in which selective areas of a powdered layer are fused, sintered, melted, or solidified, preferably using focused or non-focused input of electromagnetic energy.

12. Use according to claim 11, wherein in the powder the proportion of caprolactam is greater than 61 mol% of the lactams used, or at least 65 mol % of the lactams used, or in the range of 65-95 mol % of the lactams used,
and/or wherein the powder has a particle diameter D50 measured according to ISO 13322-2 of 50-75 µm, preferably 50-65 µm, more preferably 50-60 µm.

13. A method for preparing a thermoplastic polyamide powder for use in a layer-by-layer process in which selective areas of a powdered layer are sintered, melted, or solidified, preferably by focused or non-focused input of electromagnetic energy, wherein the powder is a thermoplastic, preferably ground polyamide powder in which the polyamide comprises or consists of laurolactam and caprolactam, and wherein the proportion of caprolactam is larger than 61%, preferably in the range of larger than 61 - 95 mol%, of the lactams used, wherein preferably the thermoplastic polyamide powder is prepared in a cryo-grinding process.

14. A method of printing a three-dimensional article comprising the steps:
providing a composition comprising a powder according to any of claims 1 to 9; and
selectively solidifying layers of the composition to form the article, preferably using focused or non-focused input of electromagnetic energy, wherein preferably the composition is provided in a layer-by-layer process,
wherein preferably in the powder the proportion of caprolactam is greater than 61 mol% of the lactams used, or at least 65 mol % of the lactams used, or in the range of 65-95 mol % of the lactams used,
and/or wherein preferably the powder has a particle diameter D50 measured according to ISO 13322-2 of 50-75 µm, preferably 50-65 µm, more preferably 50-60 µm

15. An article prepared using a method as defined in claim 14.
